# EUROPÄISCHE PATENTANMELDUNG

(11) **EP 4 023 070 A1**
(43) Veröffentlichungstag der Anmeldung: **06.07.2022**
(21) Anmeldenummer: 21206037.0
(22) Anmeldetag: 02.11.2021
(51) Int. Cl.: A22C 11/00, A23L 13/60

(54) **WURSTBRÄT UMFASSEND CALCIUMSULFAT, VERFAHREN ZUR HERSTELLUNG VON WURSTBRÄT UMFASSEND CALCIUMSULFAT, VERWENDUNG VON CALCIUMSULFAT ALS KUTTERHILFSMITTEL**

(30) Priorität: 06.11.2020 DE 102020129365
(71) Anmelder: Toro Gips S.L., 08009 Barcelona (ES)
(72) Erfinder: Reimold, Frederike, 27570 Bremerhaven (DE); Fehner, Denis, 27299 Langwedel (DE); Soukup, Ludwig, 08034 Barcelona (ES)
(74) Vertreter: Metten, Karl-Heinz

(57) **Zusammenfassung**

Die vorliegende Erfindung betrifft Wurstbrät, insbesondere für Brühwürste, umfassend Calciumsulfat, insbesondere Calciumsulfat-Dihydrat, ein Verfahren zur Herstellung von Wurstbrät umfassend die Einarbeitung von Calciumsulfat, insbesondere Calciumsulfat-Dihydrat, in insbesondere gekuttertes Fleisch, ein Wursterzeugnis, insbesondere Brühwurst, umfassend oder gebildet aus dem erfindungsgemäßen Wurstbrät, die Verwendung des erfindungsgemäßen Wurstbräts für die Herstellung von Wursterzeugnissen, die Verwendung von Calciumsulfat, insbesondere Calciumsulfat-Dihydrat, als Bestandteil von Wurstbrät oder für die Herstellung des erfindungsgemäßen Wurstbräts sowie die Verwendung von Calciumsulfat, insbesondere Calciumsulfat-Dihydrat, als Kutterhilfsmittel.

## Beschreibung

Die vorliegende Erfindung betrifft Wurstbrät, insbesondere für Brühwürste, umfassend Calciumsulfat, ein Verfahren zur Herstellung von Wurstbrät umfassend die Einarbeitung von Calciumsulfat, ein Wursterzeugnis, insbesondere eine Brühwurst, umfassend oder gebildet aus dem erfindungsgemäßen Wurstbrät, die Verwendung des erfindungsgemäßen Wurstbräts für die Herstellung von Wursterzeugnissen, die Verwendung von Calciumsulfat als Bestandteil oder für die Herstellung des erfindungsgemäßen Wurstbräts sowie die Verwendung von Calciumsulfat als Kutterhilfsmittel.

Früher wurde bei der Herstellung von Wurstwaren frisch geschlachtetes Fleisch, auch schlachtwarmes Fleisch genannt, eingesetzt. Dieses weist einen höheren pH-Wert als bereits abgekühltes bzw. gelagertes Fleisch auf sowie einen höheren Gehalt an ATP (Adenosintriphosphat). Durch die Warmfleischverarbeitung kann so ein gutes Wasserbindungsvermögen im Wurstbrät erreicht werden, was letztlich in einer schnittfesten Wurstware resultiert.

In Zeiten von längeren Transportwegen, unterschiedlichen Verarbeitungsstätten, und steigenden Hygienestandards bei der Verarbeitung von Lebensmitteln wird heutzutage fast ausschließlich auf die Kaltfleischverarbeitung zur Herstellung von Wursterzeugnissen gesetzt. Es ist bekannt, dass mit zunehmender Lagerzeit die Eiweißquellfähigkeit und die Bindefähigkeit des Fleisches nachlassen. Durch den Abbau des ATPs sinkt auch der pH-Wert des Fleisches und es findet eine verminderte Wasseraufnahme statt, was im Endprodukt zu starkem Fett- bzw. Geleeabsatz führen kann.

Um dem vorzubeugen, werden dem Fleisch bei der Herstellung einige Hilfsmittel, wie beispielsweise Kutterhilfsmittel, insbesondere künstliche Diphosphate, zugesetzt. Diese sollen die Rolle des ATPs analog der Warmfleischverarbeitung erfüllen und zu einer verbesserten Wasserbindung sowie einem erhöhten Emulgiervermögen führen. Als synthetische Kutterhilfsmittel werden üblicherweise Mono-, Di- oder Triphosphate eingesetzt, wobei deren Reinheit dabei den Standards für Lebensmittel genügen und deren Verwendung auf dem fertigen Erzeugnis deklariert werden muss. Weiterhin gilt, dass die Kutterhilfsmittel höchstens in einer Menge von 0,3 % bezogen auf die verwendete Fleisch- und Fettmenge, zugesetzt werden dürfen (Fleisch-Verordnung vom 19. Dezember 1959 sowie Verordnung zur Änderung der Fleischverordnung vom 25. August 1969) und der pH-Wert der Stoffe oder ihrer Vermischungen, gemessen in einer 0,5 %-igen wässrigen Lösung den Wert von 7,3 nicht überschreiten darf.

Zusammenfassend bewirken Kutterhilfsmittel eine verbesserte Wasserbindung, eine Stabilisierung des pH-Werts, eine längere Haltbarkeit sowie eine verbesserte Gelier- und Quellfähigkeit. In dem fertigen Wursterzeugnis resultiert dies in einer schnittfesteren Konsistenz.

Problematisch bei den synthetisch hergestellten Phosphaten ist, dass diese dem menschlichen Körper durch Verzehr der Wurstware in freier Form, das heißt ohne beispielsweise die Bindung an ein Nucleosid wie im ATP, zugeführt werden. Daher sind diese besonders resorptiv, was dazu führt, dass der Körper mehr Phosphat aufnimmt und speichert, als er benötigt, wohingegen überschüssiges natürliches Phosphat einfach ausgeschieden werden kann. Eine vermehrte Aufnahme von synthetischem Phosphat steht im Verdacht ein erhöhtes Osteoporose-Risiko, ein erhöhtes Herzinfarkt-Risiko und ein erhöhtes Schlaganfall-Risiko zu fördern und soll auch Auslöser vieler Nierenerkrankungen und einem vorzeitigen Altern der Haut sein.

Inzwischen gibt es einige Ansätze, Hilfsstoffe oder Ersatzstoffe für die klassischen Kutterhilfsmittel zu entwickeln, welche die vorangehenden Nachteile umgehen sollen.

Die DE 10 2007 033 407 A1 zeigt fleischhaltige Produkte mit einem Gemüse- und/oder Obstgehalt von mehr als 25 % bezogen auf das Frischegewicht, wobei dem Gemüse und/oder Obst während der Herstellung des Fleischprodukts das Wasser ganz oder teilweise entzogen wird. Die erhaltenen Produkte sollen sich in ihrer Konsistenz und Textur nicht von herkömmlichen Fleischprodukten unterscheiden.

Die EP 2 193 724 A1 offenbart ein grillfertiges Fleischprodukt aus zwei fleischhaltigen Strängen, die aus kleinteiligem Fleisch und einem Geliermittel gefestigt sind. Zur Erhöhung der Festigkeit soll das grillfertige Fleischprodukt mit einem Festigungsmittel enthaltend Calciumsalze besprüht werden können, wobei das enthaltene Geliermittel durch Einlagerung der Calciumionen gelieren und eine dreidimensionale Struktur ausbilden soll.

Die Hilfsmittel oder Ersatzstoffe, die aus dem Stand der Technik bekannt sind, zeigen entweder den Zusatz von pflanzlichen Stoffen, um die Menge an Kutterhilfsmittel reduzieren zu können oder den Einsatz von Alginaten. Alternativ dazu sind auch Kutterhilfsmittel in Form von Acetaten, Citraten, Lactaten, Tartraten oder Salzen anderer Genusssäuren bekannt.

Im Falle einer Reduktion an herkömmlichem Kutterhilfsmittel ist das Problem der Anhäufung von synthetischem Phosphat im menschlichen Körper nicht gelöst. Der Ersatz der Phosphate als Kutterhilfsmittel durch Acetate, Citrate, Lactate und/oder Tartrate führt meist zu einer veränderten Konsistenz oder Textur des fertigen Wursterzeugnisses. Zudem werden bei Ersatzmitteln häufig weitere Co-Hilfsmittel benötigt, sodass diese ihre volle Wirkung entfalten können, wie beispielsweise Salz-Sprühlösungen.

Die aus dem Stand der Technik bekannten Hilfsstoffe bzw. Ersatzstoffe sind noch stets mit Nachteilen behaftet und lassen Wünsche offen. Der vorliegenden Erfindung lag daher die Aufgabe zugrunde, die Nachteile des Stands der Technik betreffend Kutterhilfsmittel bzw. Hilfsstoffe zu überwinden und ein einfach zu gewinnendes, kostengünstiges und gesundheitlich unbedenkliches Kutterhilfsmittel bereitzustellen.

Demgemäß wurde ein Wurstbrät, insbesondere für Brühwürste, gefunden umfassend Calciumsulfat. Das Calciumsulfat gemäß der vorliegenden Erfindung soll dabei die Rolle des Kutterhilfsmittels einnehmen.

Ein "Kutterhilfsmittel" im Sinne der vorliegenden Erfindung beschreibt einen Hilfsstoff in Form von Calciumsulfat, der dem Wurstbrät während und/oder nach dem Kuttern zugegeben wird und den Einsatz weiterer handelsüblicher Kutterhilfsmittel, insbesondere Phosphaten, im Wesentlichen obsolet machen soll. Das Kutterhilfsmittel soll analog dem Kutterhilfsmittel eine verbesserte Wasserbindung im Wurstbrät bewirken, eine stabile Einstellung des pH-Werts sowie für eine längere Haltbarkeit und verbesserte Gelier- und Quellfähigkeit sorgen. Dies soll in dem fertigen Wursterzeugnis in einer zu den herkömmlichen Kutterhilfsmitteln vergleichbaren Biss- und Schnittfestigkeit resultieren, sowie der typischen Farbe. Der Einsatz des Kutterhilfsmittels soll weiterhin zu keinem negativen Fremdgeschmack oder Fremdgeruch in dem fertigen Wursterzeugnis führen.

Ein "Kutterhilfsmittel" im Sinne der vorliegenden Erfindung beschreibt einen synthetischen Hilfsstoff und umfasst Mono-, Di- und/oder Triphosphate, Citrate, Acetate, Lactate, Tartrate und verwandte Salze von Genusssäuren, insbesondere Phosphate. Diese stehen im Verdacht negative Auswirkungen auf die Gesundheit zu haben.

Eine "Brühwurst" im Sinne der vorliegenden Erfindung beschreibt ein Wursterzeugnis, bei der zerkleinertes, rohes Fleisch, insbesondere in einem mageren und einem fetthaltigeren Anteil, mit anderen Komponenten, den sogenannten Kuttersalzen, nach der Zugabe von Wasser, meistens in Form von Kuttereis, ganz oder teilweise aufgeschlossen wird, sodass ein Wurstbrät entsteht, welches anschließend einer Hitzebehandlung, meist in Form von Brühen in siedendem Wasser, unterzogen wird. Während der Hitzebehandlung denaturieren die Proteine im Wurstbrät, sodass ein schnittfestes Wursterzeugnis erhalten wird. Zu den Brühwürsten zählen üblicherweise Wiener und Frankfurter Würstchen, Fleischwürste, wie Mortadella, Jagdwurst, Bierwurst und Lyoner, sowie Fleischkäse.

In einer zweckmäßigen Ausgestaltung des erfindungsgemäßen Wurstbräts soll das enthaltene Kutterhilfsmittel in Form von Calciumsulfat Calciumsulfat-Anhydrit und/oder Calciumsulfat-Dihydrat umfassen oder darstellen. In einer bevorzugten Ausgestaltung wird als Kutterhilfsmittel Calciumsulfat-Dihydrat eingesetzt. Besonders bevorzugt ist es dabei wenn das Calciumsulfat nur in Form des Dihydrats zugegeben wird und auf den Einsatz von Calciumsulfat-Anhydrit komplett verzichtet wird. Es hat sich gezeigt, dass Wurstbrät, welches Calciumsulfat als Kutterhilfsmittel enthält, vergleichbare Werte in der Wasseraktivität, dem pH-Wert und der Wasseraktivität aufweist, wie das Wurstbrät hergestellt mit Phosphaten als Kutterhilfsmittel. In einem Vergleich zwischen Calciumsulfat-Anhydrit und Calciumsulfat-Dihydrat hat sich gezeigt, dass die Werte des Dihydrats noch näher an dem herkömmlichen Wurstbrät mit Phosphat liegen.

Das erfindungsgemäße Wurstbrät umfasst rohes Fleisch, wobei zur Herstellung der Brühwurste insbesondere rotes Fleisch verwendet wird. Das rote Fleisch des erfindungsgemäßen Wurstbräts kann dabei Rindfleisch, Kalbfleisch, Schweinefleisch, Schaffleisch, Lammfleisch, Kaninchenfleisch, Pferdefleisch, Ziegenfleisch oder Hasenfleisch umfassen, wobei auch Mischungen der verschiedenen Fleischsorten möglich sind. Beispielsweise sind aufgrund der bevorzugten Verwendung von einem mageren Fleischanteil und einem fetthaltigeren Fleischanteil auch Mischungen denkbar, bei denen eine grundsätzlich fetthaltigere Fleischsorte mit einer mageren Fleischsorte vermengt wird. Alternativ oder zusätzlich zum roten Fleisch kann in der Herstellung der Brühwurste auch ein erfindungsgemäßes Wurstbrät verwendet werden, das Geflügelfleisch umfasst. Weiterhin umfasst das erfindungsgemäße Wurstbrät ein oder mehrere Gewürze und Wasser, bevorzugt in der Form von Kuttereis, um bei der Verarbeitung, insbesondere beim Kuttern, gleichzeitig ein internes Kühlmittel zu haben.

In einer bevorzugten Ausführungsform des erfindungsgemäßen Wurstbräts liegt das Calciumsulfat in einer Menge im Bereich von 0,1 bis 5,0 Gew.-%, insbesondere in einer Menge im Bereich von 0,5 bis 1,0 Gew.-%, vor, bezogen auf das Gesamtgewicht des Wurstbräts. Es hat sich gezeigt, dass Wurstbrät mit dieser Menge an Calciumsulfat eine niedrigere Wasseraktivität aufweist, als Proben von Wurstbrät mit einem höheren oder niedrigeren Gehalt an Calciumsulfat, was bedeutet, das mehr Wasser fest gebunden vorliegt, was in dem finalen Wursterzeugnis in einer schnittfesteren Wurstware resultiert. Auch in dieser Ausführungsform ist es bevorzugt, wenn die Menge an Calciumsulfat insbesondere Calciumsulfat-Dihydrat darstellt.

In einer bevorzugten Ausgestaltung des erfindungsgemäßen Wurstbräts ist dieses im Wesentlichen frei von Kutterhilfsmitteln auf Basis von synthetischen Phosphaten. Besonders bevorzugt ist es, wenn das Wurstbrät im Wesentlichen frei von jeglichen weiteren synthetischen Kutterhilfsmitteln, wie Acetaten, Citraten, Lactaten oder Tartraten ist. Die gesundheitlichen Auswirkungen des synthetischen Phosphats für den menschlichen Körper wurden bereits diskutiert. Im Falle der handelsüblichen alternativen Kutterhilfsmittel, wie Acetate, Citrate, Lactate oder Tartrate, haben diese negative Auswirkungen auf das fertige Wursterzeugnis im Hinblick auf die Konsistenz, die Farbe, den Geschmack oder den Geruch. Diese alternativen Kutterhilfsmittel führen dabei zu einem Wursterzeugnis, das zu weich oder zu hart in der Konsistenz bzw. Textur ist oder liefern einen atypischen, beim Verzehr störenden Geruch oder Beigeschmack.

Das erfindungsgemäße Wurstbrät enthält zur Abrundung des Geschmacks des finalen Wursterzeugnisses zweckmäßig zusätzlich ein oder mehrere Gewürze. Diese sind dem Fachmann bekannt und variieren je nach Wurstsorte. Bevorzugt sind die Gewürze ausgewählt aus einer Gruppe bestehend aus Pfeffer, Koriander, Ingwer, Kardamom, Paprika, Muskat und beliebigen Mischungen hiervon. Um die finale Wurstware insbesondere länger haltbar und lagerbar zu machen, kann das erfindungsgemäße Wurstbrät ferner weitere Additive enthalten, insbesondere in Form von Farbstabilisatoren, Geliermitteln und/oder Geschmacksverstärkern.

In einer bevorzugten Ausgestaltung des erfindungsgemäßen Wurstbräts verfügt das Calciumsulfat, insbesondere das Calciumsulfat-Dihydrat, über eine Reinheit von mindestens 97 %, bevorzugt von mindestens 98 % und besonders bevorzugt von mindestens 99 %. Diese Werte gehen konform mit der zugelassenen Menge an Schwermetallen nach den EU-Lebensmittelrichtlinien.

Zweckmäßig weist das Calciumsulfat, insbesondere das Calciumsulfat-Dihydrat, in dem erfindungsgemäßen Wurstbrät eine mittlere Partikelgröße D₅₀ im Bereich von 1 bis 1000 µm, insbesondere im Bereich von 2 bis 750 µm auf. Besonders bevorzugt sind mittlere Partikelgrößen D₅₀ im Bereich von 5 bis 100 µm und ganz besonders bevorzugt solche im Bereich von 10 bis 50 µm. Die mittleren Partikelgrößen werden dabei mittels Laser-Diffraktionsanalyse nach ISO 13320:2009-10 bestimmt.

Die der Erfindung zugrunde liegende Aufgabe wird weiterhin gelöst durch ein Verfahren zur Herstellung von Wurstbrät, insbesondere des erfindungsgemäßen Wurstbräts, umfassend die Einarbeitung von Calciumsulfat, bevorzugt Calciumsulfat-Anhydrit oder Calciumsulfat-Dihydrat, wobei auch Mischungen des Anhydrits und des Dihydrats denkbar sind, insbesondere in gekuttertes Fleisch. In einem besonders bevorzugten erfindungsgemäßen Verfahren wird Calciumsulfat-Dihydrat, insbesondere in gekuttertes Fleisch, eingearbeitet, insbesondere ohne die Zugabe von Calciumsulfat-Anhydrit.

Das erfindungsgemäße Verfahren zur Herstellung von Wurstbrät, umfasst dabei, insbesondere in dieser Reihenfolge, die Schritte:
i) die Zurverfügungstellung von Fleisch mit einem ersten Fettanteil und Fleisch mit einem zweiten Fettanteil, wobei der erste Fettanteil kleiner als der zweite Fettanteil ist,
ii) Kuttern, insbesondere Trockenkuttern, des Fleisches mit einem ersten Fettanteil,
iii) Zugabe des Fleisches mit einem zweiten Fettanteil
iv) gemeinsames Kuttern des Fleisches mit einem ersten und einem zweiten Fettanteil unter Zugabe von Wasser, insbesondere Kuttereis
v) Zugabe und Untermengen von Calciumsulfat, bevorzugt Calciumsulfat-Dihydrat.

In einer bevorzugten Ausgestaltung des erfindungsgemäßen Verfahrens wird das Calciumsulfat, insbesondere das Calciumsulfat-Dihydrat, erst Ende des Kuttervorgangs zugegeben und dem Wurstbrät untergemengt. Dies hat den Vorteil, dass das Calciumsulfat besser verteilt werden kann und ein homogeneres Wurstbrät entsteht. In einer alternativen Ausgestaltung des erfindungsgemäßen Verfahrens kann das Calciumsulfat auch während der Schritte ii) oder iv) zugegeben werden, oder auch portionsweise über das gesamte Verfahren verteilt. Die Zugabe des Calciumsulfats, welches die Wasserbindung beeinflusst, zusammen mit dem Wasser, insbesondere dem Kuttereis, in Schritt iv) ist dabei wenig bevorzugt.

Die der Erfindung zugrunde liegende Aufgabe wird ebenfalls gelöst durch ein Wursterzeugnis, insbesondere eine Brühwurst, umfassend oder gebildet aus dem erfindungsgemäßen Wurstbrät und insbesondere gemäß dem erfindungsgemäßen Herstellungsverfahren des Wurstbräts.

In einer bevorzugten Ausgestaltung dieses Wursterzeugnisses, ist dieses im Wesentlichen frei von Kutterhilfsmitteln auf der Basis von synthetischen Phosphaten und insbesondere frei von jeglichen anderen synthetischen Kutterhilfsmitteln, wie Acetaten, Citraten, Lactaten oder Tartraten.

Die der Erfindung zugrunde liegende Aufgabe wird auch gelöst durch die Verwendung des erfindungsgemäßen Wurstbräts für die Herstellung von Wursterzeugnissen, insbesondere für das erfindungsgemäße Wursterzeugnis.

Ferner wird die der Erfindung zugrunde liegende Aufgabe gelöst durch die Verwendung von Calciumsulfat, insbesondere von Calciumsulfat-Dihydrat, als Bestandteil von Wurstbrät oder für die Herstellung von Wurstbrät, insbesondere des erfindungsgemäßen Wurstbräts. Erfindungsgemäß wird das Calciumsulfat, insbesondere das Calciumsulfat-Dihydrat, dabei als Kutterhilfsmittel verwendet.

Mit dem erfindungsgemäßen Wurstbrät, dem erfindungsgemäßen Verfahren zur Herstellung des Wurstbräts, dem erfindungsgemäßen Wursterzeugnis umfassend oder gebildet aus dem erfindungsgemäßen Wurstbrät sowie der Verwendung des erfindungsgemäßen Wurstbräts und der erfindungsgemäßen Verwendung von Calciumsulfat als Kutterhilfsmittel geht die überraschende Erkenntnis einher, dass ein einfaches, kostengünstiges und gesundheitlich unbedenkliches Ersatzmittel für herkömmliche Kutterhilfsmittel bereitgestellt werden kann, wobei das Wurstbrät mit diesem Ersatzmittel eine vergleichbare Wasserbindung, einen vergleichbaren pH-Wert und ein vergleichbares Emulgiervermögen aufweist zu denen mit herkömmlichen Kutterhilfsmitteln. Dies resultiert in den fertigen Wursterzeugnissen in einer vergleichbaren Haltbarkeit und Schnittfestigkeit sowie Konsistenz und Textur.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wurstbrät, insbesondere für Brühwürste, umfassend Calciumsulfat.

2. Wurstbrät nach Anspruch 1, **dadurch gekennzeichnet, dass** das Calciumsulfat Calciumsulfat-Anhydrit und/oder Calciumsulfat-Dihydrat, insbesondere Calciumsulfat-Dihydrat, umfasst oder darstellt.

3. Wurstbrät nach Anspruch 1 oder 2, **dadurch gekennzeichnet, dass** dieses Calciumsulfat-Dihydrat und kein Calciumsulfat-Anhydrit enthält.

4. Wurstbrät nach einem der vorangehenden Ansprüche, ferner umfassend Fleisch, insbesondere rotes Fleisch, ein oder mehrere Gewürze und gegebenenfalls Kuttereis.

5. Wurstbrät nach Anspruch 4, **dadurch gekennzeichnet, dass** das rote Fleisch Rindfleisch, Kalbfleisch, Schweinefleisch, Schaffleisch, Lammfleisch, Kaninchenfleisch, Pferdefleisch, Ziegenfleisch und/oder Hasenfleisch umfasst, insbesondere Schweinefleisch.

6. Wurstbrät nach einem der vorangehenden Ansprüche, **dadurch gekennzeichnet, dass** das Calciumsulfat, insbesondere das Calciumsulfat-Dihydrat, in einer Menge im Bereich von 0,1 bis 5,0 Gew.-%, insbesondere in einer Menge im Bereich von 0,5 bis 1,0 Gew.-%, vorliegt, bezogen auf das Gesamtgewicht des Wurstbräts.

7. Wurstbrät nach einem der vorangehenden Ansprüche, **dadurch gekennzeichnet, dass**
dieses im Wesentlichen frei von Kutterhilfsmitteln auf Phosphatbasis, insbesondere im Wesentlichen frei von jeglichen Kutterhilfsmitteln ist.

8. Wurstbrät nach einem der Ansprüche 4 bis 7, **dadurch gekennzeichnet, dass** die Gewürze ausgewählt sind aus der Gruppe bestehend aus Pfeffer, Koriander, Ingwer, Kardamom, Paprika, Muskat und beliebigen Mischungen hiervon.

9. Wurstbrät nach einem der vorangehenden Ansprüche, ferner umfassend Additive, insbesondere in Form von Farbstabilisatoren, Geliermitteln und/oder Geschmacksverstärkern.

10. Wurstbrät nach einem der vorangehenden Ansprüche, **dadurch gekennzeichnet, dass**
das Calciumsulfat, insbesondere das Calciumsulfat-Dihydrat, über eine Reinheit von mindestens 97 %, bevorzugt von mindestens 98 % und besonders bevorzugt von mindestens 99 % verfügt.

11. Wurstbrät nach einem der vorangehenden Ansprüche, **dadurch gekennzeichnet, dass**
das Calciumsulfat, insbesondere das Calciumsulfat-Dihydrat, eine mittlere Partikelgröße D₅₀ im Bereich von 1 bis 1000 µm, insbesondere im Bereich von 2 bis 250 µm aufweist.

12. Verfahren zur Herstellung von Wurstbrät nach einem der vorangehenden Ansprüche, umfassend
die Einarbeitung von Calciumsulfat, bevorzugt Calciumsulfat-Anhydrit und/oder Calciumsulfat-Dihydrat, besonders bevorzugt von Calciumsulfat-Dihydrat und insbesondere von Calciumsulfat-Dihydrat und ohne Zugabe von Calciumsulfat-Anhydrit.

13. Verfahren nach Anspruch 12, umfassend, insbesondere in dieser Reihenfolge,
i) die Zurverfügungstellung von Fleisch mit einem ersten Fettanteil und Fleisch mit einem zweiten Fettanteil, wobei der erste Fettanteil kleiner als der zweite Fettanteil ist,
ii) Kuttern, insbesondere Trockenkuttern, des Fleisches mit einem ersten Fettanteil,
iii) Zugabe des Fleisches mit einem zweiten Fettanteil
iv) gemeinsames Kuttern des Fleisches mit einem ersten und einem zweiten Fettanteil unter Zugabe von Wasser, insbesondere Kuttereis
v) Zugabe und Untermengen von Calciumsulfat, bevorzugt Calciumsulfat-Dihydrat.

14. Wursterzeugnis, insbesondere Brühwurst, umfassend oder gebildet aus dem Wurstbrät nach einem der Ansprüche 1 bis 11, insbesondere gemäß einem Verfahren nach Anspruch 12 oder 13.

15. Wursterzeugnis nach Anspruch 14, gekennzeichnet, dass
dieses im Wesentlichen frei von Kutterhilfsmitteln auf Phosphatbasis, insbesondere im Wesentlichen frei von jeglichen Kutterhilfsmitteln ist.

16. Verwendung des Wurstbräts nach einem der Ansprüche 1 bis 11 für die Herstellung von Wursterzeugnissen.

17. Verwendung von Calciumsulfat, insbesondere von Calciumsulfat-Dihydrat, als Bestandteil von Wurstbrät oder für die Herstellung von Wurstbrät.

18. Verwendung von Calciumsulfat, insbesondere von Calciumsulfat-Dihydrat, als Kutterhilfsmittel.

19. Verwendung nach Anspruch 17 oder 18, **dadurch gekennzeichnet, dass** das Calciumsulfat eine mittlere Partikelgröße D₅₀ im Bereich von 1 bis 1000 µm, insbesondere im Bereich von 2 bis 250 µm umfasst.
